# EUROPEAN PATENT SPECIFICATION

(11) **EP 4 191 206 B1**
(45) Date of publication and mention of the grant of the patent: **27.05.2026**
(21) Application number: 22157695.2
(22) Date of filing: 21.02.2022
(51) Int. Cl.: G01D 5/244

(54) **BEARINGLESS ROTARY ENCODERS WITH A TRANSPORT LOCK**
LAGERLOSE DREHGEBER MIT EINEM TRANSPORTSCHLOSS
CODEURS ROTATIFS SANS PALIER COMPORTANT UN VERROU DE TRANSPORT

(30) Priority: 02.12.2021 US 202163285443 P
(43) Date of publication of application: 07.06.2023
(73) Proprietor: Hengstler GmbH, 78554 Aldingen (DE)
(72) Inventor: WOEHRSTEIN, Andreas, 78126 Neuhausen (DE); WEBER, Heinz, 78559 Gosheim (DE)
(74) Representative: Cabinet Beaumont

(56) References cited:
- WO-A1-2012/176911
- CN-A- 109 357 691
- DE-B4- 102012 216 784
- JP-A- 2015 152 591
- US-B1- 7 601 948

## Description

The present invention relates to embodiments of a bearingless rotary encoder with a transport lock according to the preamble of claim 1 or claim 2.

Embodiments of the present invention are particularly relevant in the field of servo motors. These types of motors are operated together with a rotary encoder, whereby the encoder detects the angular position and/or the speed of the shaft of the servo motor and feeds this data to a control loop, which in turn controls the current supply to the motor windings. For this purpose, the encoder shaft without bearings is directly connected to the motor shaft via a cone connection without using a coupling or compensating element, which allows a shorter design of the encoder and also of the overall servo motor system.

High-resolution rotary encoders are usually designed with a bearing-mounted encoder shaft so that the rotor of the encoder with the sensitive measuring scale is held in position without risk of damage even during transport. The bearing of the encoder shaft also simultaneously prevents the penetration of particles into the sensitive area of the sensor system.

With rotary encoders that do not have their own bearings, increased care is required during transport, storage and installation to prevent the code disk from being damaged by loose movement, particles from entering and interfering with the sensor system.

Auxiliaries are required to compensate for tolerances during assembly. With single-turn rotary encoders, the coded output signals are repeated with each new revolution of the encoder shaft, whereas multi-turn absolute rotary encoders generate an unmistakable output signal for every shaft position.

WO 2012 / 176 911 A1 and JP 2015 152 591 A disclose a bearingless rotary encoder according to the preamble of claim 1. There is disclosed an element as a transport lock which is fixed by a screw connection to the stator or the rotor.

DE 10 2012 216 784 B3 discloses an element as a transport lock which is secured in its position by an additional safety element.

It is the object of the present invention to provide a bearingless rotary encoder with a transport lock that allows simplified assembly and safe transport of the rotary encoder.

In order to solve this problem, there is proposed a rotary encoder with a transport lock according to claim 1 or claim 2.

Preferred embodiments of the invention and other advantageous features are subject of the dependent claims.

Embodiments of the present invention simplify the transportation, storage, and assembly of a bearingless encoder from production to the point of use.

In some embodiments, the transport lock consists of at least three elements:
1. A plug fixing the encoder shaft with a cone and surface
2. The encoder shaft with a cone and a defined length fixed in transport
3. An encoder housing that fixes the shaft and realizes a seal

The three elements are designed in such a way that, in a transport state, the shaft is fixed and sealed and thus protection against penetrating particles is realized.

By fixing and pre-centering the shaft to the housing for the intended use, simplified and safe assembly is achieved with increased protection against ingress of particles during storage and assembly.

In the preferred embodiment of the present invention, the bearingless encoder comprises: a stator, a rotor and at least one forming element as a transport lock, wherein the forming element fixes the rotor in the stator so precisely that the rotor is protected from damage during transport.

The stator comprises a housing and a cap to close the housing, and the rotor comprises an encoder shaft.

According to a first aspect of the invention as defined in claim 1, the forming element comprises a plug part which is to be inserted into a bore of the encoder shaft of the rotor, and a head part which covers an opening of a cap of the stator, the head part further comprising axial protruding ribs which engage the opening in the manner of a snap connection. Thus, the forming element is mounted or dismounted by a snap mechanism.

According to a second aspect of the invention as defined in claim 2, the forming element comprises a plug part which is inserted into a bore of the encoder shaft of the rotor, and a head part which covers an opening of a cap of the stator, the head part comprising radial protruding ribs which engage the opening in the manner of a rotary connection. Thus, the forming element is assembled or disassembled by a rotary movement of the forming element.

The forming element is designed to seal the interior of the encoder against contamination by closing the opening in the cap and displacing the rotor and pressing it axially against the stator in order to fix the rotor at the stator.

In a preferred embodiment of the invention, the forming element fixes the rotor in the stator so that a meshing of a toothed portion of the encoder shaft with a multi-turn gearbox arranged in the housing is maintained.

In another preferred embodiment of the invention, the forming element is exchangeable with at least one modified forming element after connection the encoder at the motor, so that the interior of the encoder continues to be protected against contamination.

Preferably, the forming element is an elastic or rigid part made of plastic or rubber.

Preferred embodiments of the invention are explained in more detail below with reference to the drawings.
- Figure 1: is an explosive view of a preferred embodiment of a rotary encoder according to the invention.
- Figure 2: is a sectional drawing of the first embodiment of the rotary encoder with engaged transport lock.
- Figure 3: is a sectional drawing of the first embodiment of the rotary encoder with removed transport lock.
- Figure 4: is a sectional drawing of the rotary encoder with removed transport lock and a protection element.
- Figure 5: is a sectional drawing of a second embodiment of the rotary encoder with engaged transport lock.
- Figure 6: is a sectional drawing of a second embodiment of the rotary encoder with removed transport lock and a protection element.

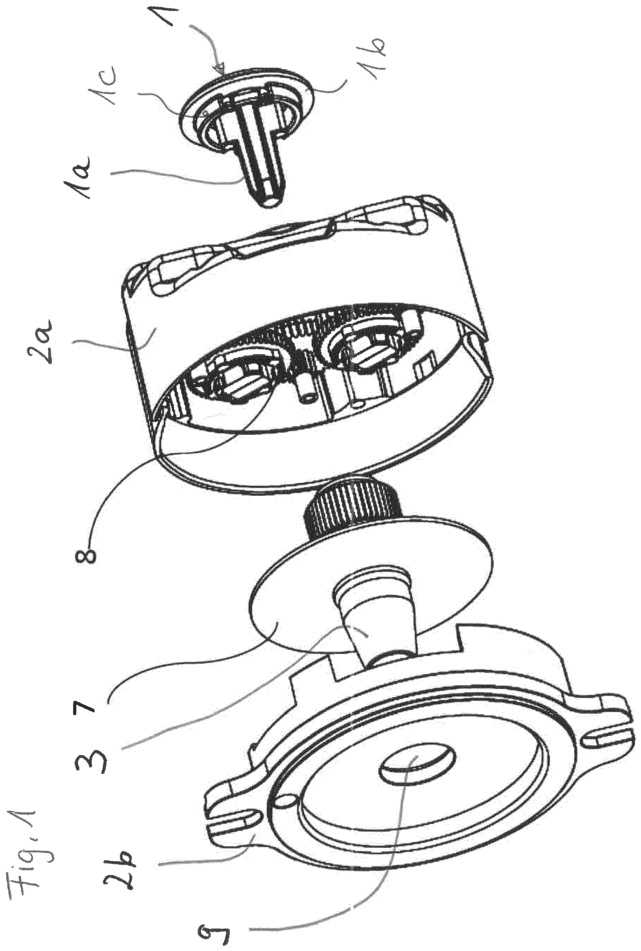

A first preferred embodiment of the invention is shown in Figures 1 to 4.

The rotary encoder is a bearingless encoder.

The rotary encoder includes a stator 2 which comprises a housing 2b and a cap 2a for covering the housing 2b. Further components of the encoder are arranged in the housing 2b closed by the cap 2a. These are in particular a rotor 3 comprising an encoder shaft 3a, a multi-turn gear box 8 and a code disk 7 which is fixedly arranged on the encoder shaft 3a.

The housing 2b has an opening 9 through which a conical end of the encoder shaft 3a is inserted. This conical end of the encoder shaft 3a is to be connected to a shaft 5 of a motor. The motor and the encoder together form a servo motor. The encoder shaft 3 is designed as a hollow shaft and comprises a through hole.

When the encoder is mounted at the motor, the conical end of the encoder shaft 3a engages with an associated conical section of a central bore in the motor shaft 5. The motor shaft 5 has a central bore which has a threaded section over part of its length. This threaded section is engaged by an associated threaded section of a connecting screw 4. The connecting screw 4 is inserted from above through an opening 10 in the cap 2a and through the hole in the encoder shaft 3 and engages the treaded section in the bore of the motor shaft 5.

Accordingly, the connecting screw 4 presses the encoder shaft 3a into the motor shaft 5, and the two tapered sections of the encoder shaft 3a and the motor shaft 5 are precisely centered with respect to each other and engage without play. The advantage of such a conical fit is that the encoder shaft 3a and the motor shaft 5 center themselves automatically and run-out inaccuracy is avoided in this case. Between the encoder shaft 3a and the housing 2b there remains a small circular open gap 6b, so that the rotor 3 of the encoder can rotate relative to the stator 2 of the encoder.

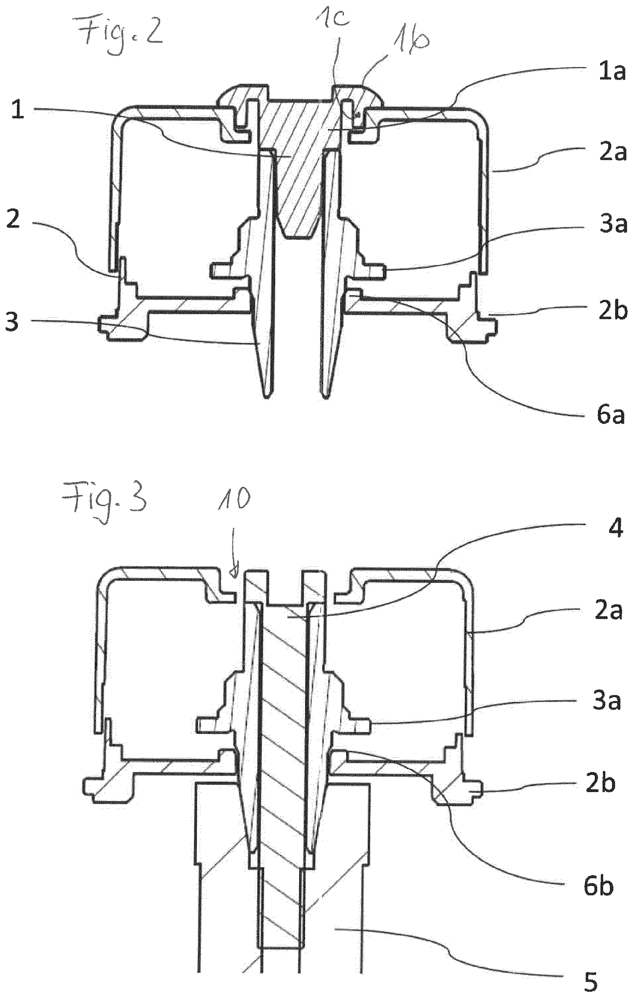

The encoder shaft 3a has toothing at its other end. This toothing is in mesh with the multi-turn gearbox 8 of a revolution counter. In Figures 2-4, the code disk 7 and gearbox 8 are not shown.

The encoder is transported without the motor, and because the rotor 3 of the encoder is not fixed to the motor shaft 5 with the connecting screw 4, the rotor 3, consisting of the encoder shaft 3a and code disk 7, is thus loosely and movably arranged in the housing. To prevent damage to the rotor 3, in particular to the code disk 7 during assembly and transport, a transport lock is provided in accordance with the invention.

The transport lock is preferably designed as an elastic forming element 1 made of plastic or rubber which partially takes over the task of the connecting screw. The forming element 1 is essentially designed as a plug 1a that can be inserted into the bore of the encoder shaft 3a with a precise fit. At its upper end, the forming element 1 has a flat head 1b with flexible ribs 1c that snugly snap into the opening 10 of the cap 2a.

The forming element 1 is formed such that when it is inserted between the cap 2a and the encoder shaft 3a, the encoder shaft 3a is pressed downwards and toward the housing 2b with its outer periphery abutting the edge of the opening 9 of the housing 2b. This closes the gap 6a so that the rotor 3 and the stator 2 of the encoder are fixed relative to each other. At the same time, the underside of the head 1b of the forming element 1 is pressed on the upper side of the cap 2a and prevents dirt from entering the interior of the encoder through the opening 10 in the cap 2a. No contamination can enter the encoder via the closed gap 6a between encoder shaft 3a and housing 2b either.

By fixing and pre-centering the encoder shaft 3a to the housing 2b for the intended use, simplified and safe assembly is achieved with increased protection against ingress of particles during storage and assembly.

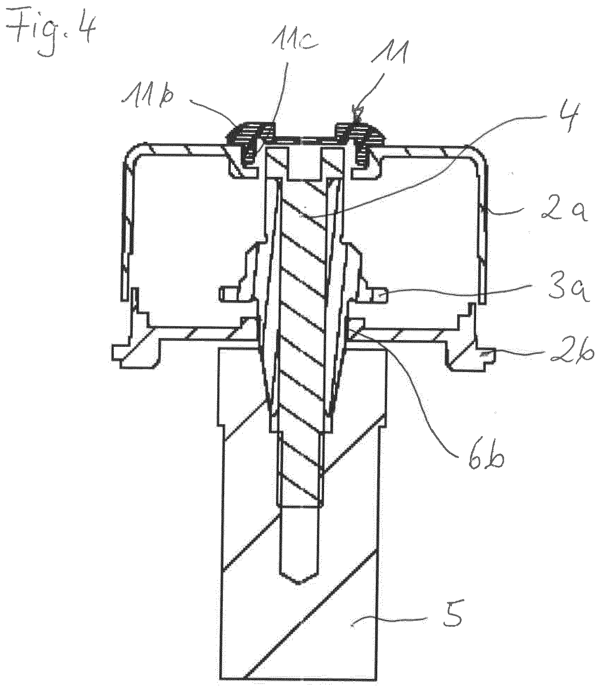

When mounting the encoder on the motor shaft 5 by means of the connecting screw 4, as shown in Figure 4, the forming element 1 used as transport lock can be exchanged for at least another forming element 11 which continues to protected the encoder against contamination. The other forming element 11 is similar to the forming element 1 but only consists of the head 11b with ribs 11c. The forming element 11 is snapped into the opening of the cap 2a so that no contamination can enter the interior of the encoder.

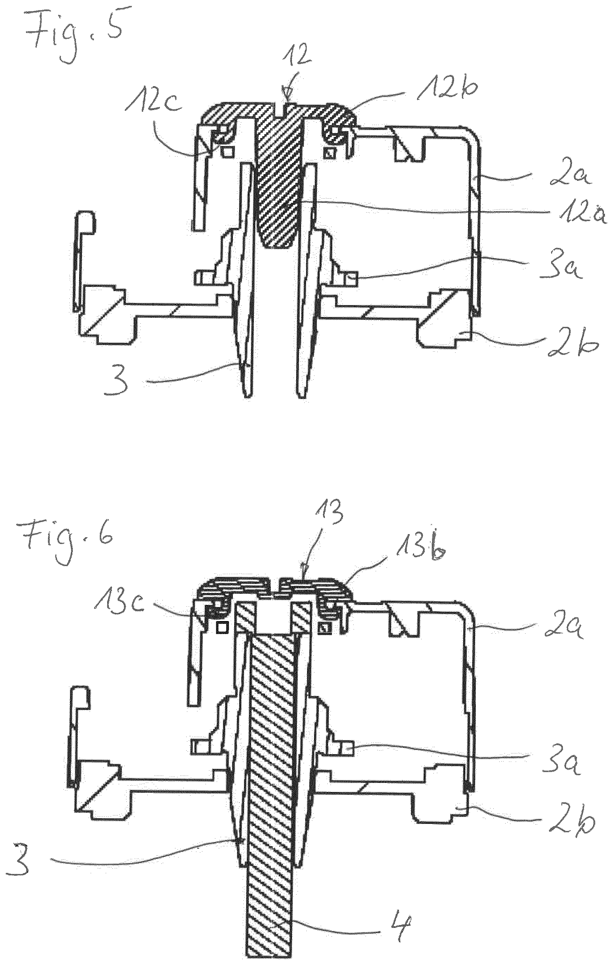

Figures 5 and 6 show another preferred embodiment of the invention.

The forming element 12 used as a transport lock consists of a plug 12a, a head 12b and ribs 12c but differs from the forming element 1 in that there are no axial ribs arranged at the head, but rather a plurality of radially projecting ribs 12c, which engage in corresponding recesses at the edge of the opening 10 in the cap 2a. The lower side of the head 12b of the forming element 12 rests on the upper side of the cap 2a. By rotating the forming element 12 about its longitudinal center axis, the radial ribs 12c engage under the edge of the opening 10 and lock the forming element 12 to the cap 2a.

The plug 12a of the forming element 12 engages the bore of the encoder shaft 3a and presses the encoder shaft 3a against the housing 2b so that the rotor 3 is fixed in position relative to the stator 2.

As seen in Figure 6, when mounting the encoder on the motor shaft 5 by means of the connecting screw 4, the forming element 12 used as transport lock can be exchanged for at least another forming element 13 which continues to protected the encoder against contamination. The other forming element 13 is similar to the forming element 12 but only consists of the head 13b with radial ribs 13c. The forming element 13 is snapped into the opening of the cap 2a by the same rotating mechanism as described above, so that no contamination can enter the interior of the encoder.

### List of reference numerals

- 1: Forming element
- 1a: Plug
- 1b: Head
- 1c: Ribs
- 2: Stator
- 2a: Cap
- 2b: Housing
- 3: Rotor
- 3a: Shaft
- 4: Connecting screw
- 5: Motor shaft
- 6: Gap
- 6a: Gap closed
- 6b: Gap open
- 7: Code disk
- 8: Gearbox
- 9: Opening
- 10: Opening
- 11: Forming element
- 11b: Head
- 11c: Ribs
- 12: Forming element
- 12a: Plug
- 12b: Head
- 12c: Ribs
- 13: Forming element
- 13b: Head
- 13c: Ribs

## Claims

1. Bearingless rotary encoder comprising:
a stator (2) comprising a housing (2b) and a cap (2a), a rotor (3) comprising an encoder shaft (3a) and at least one forming element (1), wherein the forming element (1) is a transport lock for fixing the rotor (3) in the stator (2),
wherein the forming element (1) comprises a plug part (1a) which is inserted into a bore of the encoder shaft (3a) of the rotor (3), and a head part (1b) which covers an opening (10) of the cap (2a) of the stator (2),
**characterized in that**
the head part (1b) further comprises axial ribs (1c) which engage the opening (10) in the manner of a snap connection.

2. Bearingless rotary encoder comprising:
a stator (2) comprising a housing (2b) and a cap (2a), a rotor (3) comprising an encoder shaft (3a) and at least one forming element (12), wherein the forming element (12) is a transport lock for fixing the rotor (3) in the stator (2),
wherein the forming element (12) comprises a plug part (12a) which is inserted into a bore of the encoder shaft (3a) of the rotor (3), and a head part (12b) which covers an opening (10) of the cap (2a) of the stator (2),
**characterized in that**
the head part (12b) comprises radial ribs (12c) which engage the opening (10) in the manner of a rotary connection.

3. Bearingless rotary encoder according to any of claims 1 or 2, **characterized in that** the forming element (1, 12) is designed to seal the interior of the encoder against contamination.

4. Bearingless rotary encoder according to any of claims 1 to 3, **characterized in that** the forming element (1, 12) is designed to axially displace the rotor (3) and pressing it against the stator (2).

5. Bearingless rotary encoder according to any of claims 1 to 4, **characterized in that** the forming element (1, 12) fixes the rotor (3) in the stator (2), wherein a toothed portion of the encoder shaft (3a) meshes with a multi-turn gearbox (8) arranged in the interior of the encoder.

6. Bearingless rotary encoder according to any of claims 1 to 5, **characterized in that** the forming element (1, 12) is exchangeable with at least one modified forming element (11, 13) after connecting the encoder to a motor, so that the interior of the encoder continues to be protected against contamination.

7. Bearingless rotary encoder according to any of claims 1 to 6, **characterized in that** the forming element (1, 11, 12, 13) is an elastic or rigid part made of plastic or rubber.

8. Bearingless rotary encoder according to claim 1 or 2, **characterized in that** the plug part (1a, 12a) is designed to be connected to the rotor (3) of the rotary encoder, and the head part (1b, 12b) is designed to be fixed at the stator (2) of the rotary encoder.

9. Bearingless rotary encoder according to claim 8, **characterized in that** the head part (1b, 12b) of the forming element (1, 12) comprises ribs (1c, 12c) which are axially or radially protruding from the head part (1b, 12b), the plug part (1a, 12a) is designed to be inserted into a bore of a rotor (3) of the rotary encoder, and the head part (1b, 12b) with the ribs (1c, 12c) is designed to be fixed at the stator (2) of the rotary encoder in the manner of a snap connection or rotary connection.

## Patentansprüche

1. Ein lagerloser Drehgeber, aufweisend:
einen Stator (2), der ein Gehäuse (2b) und eine Kappe (2a) aufweist,
einen Rotor (3), der eine Geberwelle (3a) und wenigstens ein Formelement (1) aufweist,
wobei das Formelement (1) eine Transportsicherung zum Fixieren des Rotors (3) im Stator (2) ist,
wobei das Formelement (1) ein Steckteil (1a), das in eine Bohrung der Geberwelle (3a) des Rotors (3) eingesetzt ist, und ein Kopfteil (1b), das eine Öffnung (10) der Kappe (2a) des Stators (2) abdeckt, aufweist,
**dadurch gekennzeichnet, dass**
das Kopfteil (1b) ferner axiale Rippen (1c) aufweist, die in die Öffnung (10) nach Art einer Schnappverbindung eingreifen.

2. Ein lagerloser Drehgeber, aufweisend:
einen Stator (2), der ein Gehäuse (2b) und eine Kappe (2a) aufweist,
einen Rotor (3), der eine Geberwelle (3a) und wenigstens ein Formelement (12) aufweist,
wobei das Formelement (12) eine Transportsicherung zum Fixieren des Rotors (3) im Stator (2) ist,
wobei das Formelement (12) ein Steckteil (12a), das in eine Bohrung der Geberwelle (3a) des Rotors (3) eingesetzt ist, und ein Kopfteil (12b), das eine Öffnung (10) der Kappe (2a) des Stators (2) abdeckt, aufweist,
**dadurch gekennzeichnet, dass**
das Kopfteil (12b) radiale Rippen (12c) aufweist, die in die Öffnung (10) nach Art einer Drehverbindung eingreifen.

3. Der lagerlose Drehgeber nach einem der Ansprüche 1 oder 2,
**dadurch gekennzeichnet, dass**
das Formelement (1, 12) zum Abdichten des Innenraums des Gebers gegen Verschmutzung eingerichtet ist.

4. Der lagerlose Drehgeber nach einem der Ansprüche 1 bis 3,
**dadurch gekennzeichnet, dass**
das Formelement (1, 12) zum axialen Verschieben des Rotors (3) und zum Andrücken desselben gegen den Stator (2) eingerichtet ist.

5. Der lagerlose Drehgeber nach einem der Ansprüche 1 bis 4,
**dadurch gekennzeichnet, dass**
das Formelement (1, 12) den Rotor (3) im Stator (2) fixiert,
wobei ein verzahnter Abschnitt der Geberwelle (3a) mit einem im Innenraum des Gebers angeordneten Drehgetriebe (8) kämmt.

6. Der lagerlose Drehgeber nach einem der Ansprüche 1 bis 5,
**dadurch gekennzeichnet, dass**
das Formelement (1, 12) nach dem Verbinden des Gebers mit einem Motor gegen wenigstens ein modifiziertes Formelement (11, 13) austauschbar ist, so dass der Innenraum des Gebers weiterhin gegen Verschmutzung geschützt ist.

7. Der lagerlose Drehgeber nach einem der Ansprüche 1 bis 6,
**dadurch gekennzeichnet, dass**
das Formelement (1, 11, 12, 13) ein elastisches oder starres Teil aus Kunststoff oder Gummi ist.

8. Der lagerlose Drehgeber nach Anspruch 1 oder 2,
**dadurch gekennzeichnet, dass**
das Steckteil (1a, 12a) zum Verbinden mit dem Rotor (3) des Drehgebers eingerichtet ist, und das Kopfteil (1b, 12b) zum Befestigen am Stator (2) des Drehgebers eingerichtet ist.

9. Der lagerlose Drehgeber nach Anspruch 8,
**dadurch gekennzeichnet, dass**
das Kopfteil (1b, 12b) des Formelements (1, 12) Rippen (1c, 12c) aufweist, die axial oder radial vom Kopfteil (1b, 12b) vorstehen,
das Steckteil (1a, 12a) zum Einsetzen in eine Bohrung eines Rotors (3) des Drehgebers eingerichtet ist, und
das Kopfteil (1b, 12b) mit den Rippen (1c, 12c) zum Befestigen am Stator (2) des Drehgebers nach Art einer Schnappverbindung oder Drehverbindung eingerichtet ist.

## Revendications

1. Encodeur rotatif sans palier comprenant :
un stator (2) comprenant un boîtier (2b) et un couvercle (2a), un rotor (3) comprenant un arbre de l'encodeur (3a) et au moins un élément de formage (1), dans lequel l'élément de formage (1) est un verrou de transport destiné à fixer le rotor (3) dans le stator (2),
dans lequel l'élément de formage (1) comprend une partie bouchon (1a) qui est insérée dans un alésage de l'arbre de l'encodeur (3a) du rotor (3), et une partie de tête (1b) qui recouvre une ouverture (10) du couvercle (2a) du stator (2),
**caractérisé en ce que**
la partie de tête (1b) comprend en outre des nervures axiales (1c) qui s'engagent dans l'ouverture (10) à la manière d'une connexion à enclenchement.

2. Encodeur rotatif sans palier comprenant :
un stator (2) comprenant un boîtier (2b) et un couvercle (2a), un rotor (3) comprenant un arbre de l'encodeur (3a) et au moins un élément de formage (12), dans lequel l'élément de formage (12) est un verrou de transport destiné à fixer le rotor (3) dans le stator (2),
dans lequel l'élément de formage (12) comprend une partie bouchon (12a) qui est insérée dans un alésage de l'arbre de l'encodeur (3a) du rotor (3), et une partie de tête (12b) qui recouvre une ouverture (10) du couvercle (2a) du stator (2),
**caractérisé en ce que**
la partie de tête (12b) comprend des nervures radiales (12c) qui s'engagent dans l'ouverture (10) à la manière d'une connexion à rotation.

3. Encodeur rotatif sans palier selon l'une quelconque des revendications 1 ou 2, **caractérisé en ce que** l'élément de formage (1, 12) est conçu pour sceller l'intérieur de l'encodeur contre la contamination.

4. Encodeur rotatif sans palier selon l'une quelconque des revendications 1 à 3, **caractérisé en ce que** l'élément de formage (1, 12) est conçu pour déplacer axialement le rotor (3) et le presser contre le stator (2).

5. Encodeur rotatif sans palier selon l'une quelconque des revendications 1 à 4, **caractérisé en ce que** l'élément de formage (1, 12) fixe le rotor (3) dans le stator (2), dans lequel une partie dentée de l'arbre de l'encodeur (3a) s'engrène avec une boîte de vitesses à plusieurs tours (8) disposée à l'intérieur de l'encodeur.

6. Encodeur rotatif sans roulement selon l'une quelconque des revendications 1 à 5, **caractérisé en ce que** l'élément de formage (1, 12) est interchangeable avec au moins un élément de formage modifié (11, 13) après la connexion de l'encodeur à un moteur, de sorte que l'intérieur de l'encodeur continue d'être protégé contre la contamination.

7. Encodeur rotatif sans roulement selon l'une quelconque des revendications 1 à 6, **caractérisé en ce que** l'élément de formage (1, 11, 12, 13) est une pièce élastique ou rigide en plastique ou en caoutchouc.

8. Encodeur rotatif sans palier selon la revendication 1 ou 2, **caractérisé en ce que** la partie de bouchon (la, 12a) est conçue pour être connectée au rotor (3) de l'encodeur rotatif, et la partie de tête (1b, 12b) est conçue pour être fixée au stator (2) de l'encodeur rotatif.

9. Encodeur rotatif sans palier selon la revendication 8, **caractérisé en ce que** la partie de tête (1b, 12b) de l'élément de formage (1, 12) comprend des nervures (1c, 12c) qui font saillie axialement ou radialement à partir de la partie de tête (1b, 12b), la partie de bouchon (la, 12a) est conçue pour être insérée dans un alésage d'un rotor (3) de l'encodeur rotatif, et la partie de tête (1b, 12b) munie des nervures (1c, 12c) est conçue pour être fixée au stator (2) de l'encodeur rotatif à la manière d'une connexion à enclenchement ou d'une connexion à rotation.
